# EUROPÄISCHE PATENTSCHRIFT

(11) **EP 4 115 107 B1**
(45) Veröffentlichungstag und Bekanntmachung des Hinweises auf die Patenterteilung: **23.07.2025**
(21) Anmeldenummer: 21713560.7
(22) Anmeldetag: 04.03.2021
(51) Int. Cl.: F16L 23/04, F16L 23/08, F16L 23/18

(54) **ROHRVERBINDUNG**
PIPE CONNECTION
RACCORD DE TUYAUTERIE

(30) Priorität: 05.03.2020 DE 102020105910
(43) Veröffentlichungstag der Anmeldung: 11.01.2023
(73) Patentinhaber: PFW Aerospace GmbH, 67346 Speyer (DE)
(72) Erfinder: EITZENBERGER, Berthold, 67071 Ludwigshafen am Rhein (DE)
(74) Vertreter: Gevers & Orès
(86) Internationale Anmeldenummer: PCT/EP2021/055443
(87) Internationale Veröffentlichungsnummer: WO 2021/175982

(56) Entgegenhaltungen:
- DE-A1- 10 239 682
- DE-A1- 102013 018 644
- DE-A1- 3 005 790
- DE-C2- 3 005 790
- DE-T2- 60 319 649
- DE-U1- 202013 101 581
- GB-A- 1 004 702
- GB-A- 2 097 880
- US-A- 5 188 400

## Beschreibung

### Technisches Gebiet

Die Erfindung bezieht sich auf eine Rohrverbindung, wobei die Rohrverbindung aus mindestens zwei Rohrteilen gebildet wird. Des Weiteren bezieht sich die Erfindung auf die Verwendung der Rohrverbindung insbesondere in einem Luftfahrzeug.

### Stand der Technik

DE 42 31 084 A1 bezieht sich auf eine Rohrverbindung. Zur Verbesserung der Handhabbarkeit, zur Verringerung des Bauvolumens bei gleichzeitig ausreichender Dichtwirkung sowie zur Erhöhung der Betriebssicherheit wird eine schraubbare Rohrverbindung vorgeschlagen. Diese umfasst an den Enden der zu verbindenden Rohre angeordnete Formteile, die über eine Muffe miteinander verschraubt sind. Die aneinander liegenden Stirnseiten der Formteile sind durch eine eine Verdrehsicherung bildende formschlüssig wirkende Profilierung gekennzeichnet, sodass das eine Formteil ein Profil und das andere ein zu diesem komplementär ausgebildetes Gegenprofil trägt. Die zur Verschraubung bestimmten Gewindeabschnitte des Formteils sowie des weiteren Formteils sind jeweils nach Art eines Links- beziehungsweise eines Rechtsgewindes ausgebildet, sodass in Verbindung mit entsprechenden Gewindeabschnitten der Muffe eine Drehbewegung letzterer eine entsprechende, einander entgegen gerichtete axiale Verschiebebewegung der Formteile zur Folge hat. Die Stirnseiten der Formteile sind jeweils mit einem ringartig ausgebildeten Ausnehmungsteil versehen, wobei beide Ausnehmungsteile sich im Montagezustand zu einer einen Flachdichtring aufnehmenden Ausnehmung ergänzen. Der Flachdichtring befindet sich somit zwischen zwei axial orientierten Dichtflächen.

EP 3 066 375 B1 bezieht sich auf eine Vorrichtung zum koaxialen Verbinden zweier Rohrleitungen sowie eine Anordnung zum Lösen. Ein Schraubflansch für die Einleitung der Rohrleitungen weist ein Außengewinde auf. Ein Druckflansch für die andere Rohrleitung umfasst eine Druckfläche für eine Mutter. Ferner ist ein Dichtring vorgesehen, der zwischen den gegenüberliegenden Stirnseiten des Schraubflansches einerseits und des Druckflansches andererseits in Ausnehmung angeordnet ist. Eine Mutter weist ein Innengewinde auf und ist auf den Druckflansch aufgeschoben und auf den Schraubflansch aufdrehbar. Der Innendurchmesser des Dichtrings ist größer oder zumindest gleich groß wie der Innendurchmesser der Rohrleitungen, wobei der Unterschied der Innendurchmesser der Rohrleitungen jeweils über einen Konusbereich des Druckflansches und einen Konusbereich des Schraubflansches ausgeglichen wird. Der Dichtring umfasst um seinen gesamten äußeren Umfang herum radial nach außen weisende gespreizte Schenkel in Form eines V-Profils.

EP 2 817 549 B1 bezieht sich auf einen Bauteilverbinder zum Verbinden von zylindrischen Bauteilen. Der Bauteilverbinder dient dem Verbinden zweier Rohrleitungen miteinander, die die zylindrischen Bauteile darstellen. Der Bauteilverbinder umfasst ferner eine Fixierhülse, die in Form eines Hohlzylinders ausgebildet ist. Die Fixierhülse umfasst ihrerseits axial ausgebildete Schlitze, die in Umfangsrichtung verteilt an den Stirnseiten der Fixierhülse angeordnet sind. Diese axialen Schlitze dienen der radialen Verformbarkeit der Fixierhülse während des Montagevorgangs.

DE 197 00 481 A1 bezieht sich auf eine Rohrkupplung für die Förderung flüssiger Medien. Es wird eine Rohrkupplung offenbart, die der Förderung flüssiger Medien dient, insbesondere Wasser, Schmutzwasser oder anderen Hochdruckmedien, die mit Schmutzpartikeln versetzt sein können. Die als Bajonett-Kupplung ausgebildete Rohrkupplung weist einen Kupplungszapfen mit Halteklauen auf, die unter zugeordnete, radial einwärts ragende Flanscheinsätze in einer Kupplungsmuffe eingreifen. Der Kupplungszapfen ist in der Kupplungsmuffe durch eine zugeordnete Sicherungseinrichtung verriegelbar.

GB 2 097 880 A, DE 30 05 790 A1 und GB 1 004 702 A beziehen sich auf eine Rohrverbindung, wobei die Rohrverbindung aus mindestens zwei Rohrteilen gebildet ist, und zwischen den Rohrteilen mindestens eine Dichtung umfassen ist, wobei die Dichtung und den Rohrteilen von einer Klemmeinrichtung umgeben sind.

Bei der Verbindung von Rohren durch Fittings sind heute noch zusätzliche Vorkehrungen erforderlich, in Gestalt von Halterungseinrichtungen und Führungseinrichtungen, welche eine Verdrehung der mit der miteinander zu verbindenden Rohre zueinander im laufenden Einsatz verhindern und eine definierte Position der Verdrehung der miteinander verbundenen Rohrteile zueinander bei der Installation vorgeben. Des Weiteren ist bei der Ausbildung von Rohrverbindungen dafür Sorge zu tragen, dass stets eine Paarung mit zueinander komplementären Geometrien von Rohrteilen an den zu verbindenden Rohren erfolgt und die Einzelteile, die miteinander an der Rohrverbindung gefügt werden, nicht verwechselt werden.

### Darstellung der Erfindung

Erfindungsgemäß wird eine Rohrverbindung mit einem ersten Rohrteil und einem zweiten Rohrteil vorgeschlagen, mit mindestens einem mehrteiligen Dichtring oder mindestens einem einteiligen Dichtring, die jeweils von einer Klemmeinrichtung umschlossen sind. Die Rohrteile umfassen jeweils eine erste vertikal oder schräg verlaufende Stirnfläche und eine zweite vertikal oder schräg verlaufende Stirnfläche, die von der Klemmeinrichtung übergriffen ist, die den mindestens einen einteiligen Dichtring oder den mindestens einen mehrteiligen Dichtring mit einer nach außen wirkenden Radialkraft beaufschlagt, die in ihrer jeweiligen Dichtposition entweder über ein umschließendes geometrisches Dreieck oder über ein umschließendes geometrisches Viereck gesichert sind.

In Weiterbildung der erfindungsgemäß vorgeschlagenen Rohrverbindung ist der einteilige Dichtring oder der mehrteilige Dichtring mit einem keilförmigen Querschnitt, einem rechteckigen Querschnitt, einem Kreisquerschnitt oder einem ovalen Querschnitt versehen.

Einen keilförmigen Querschnitt aufweisende Dichtungen für schräge Dichtflächen mit Winkeln oberhalb einer Selbsthemmung haben umlaufend eine oder mehrere Unterbrechungen und weichen deshalb bei axialer Pressung über die schräg verlaufenden Dichtflächen radial nach außen aus und vergrößern dabei ihren Umfang, wobei dies durch die Klemmeinrichtung begrenzt wird. Deshalb entsteht bei schrägen Dichtflächen, welche umlaufend einen Konus ergeben, ein zwingender radialer Kontakt bei axialer Klemmkraft zwischen Dichtung, Fitting und Klemmring durch die hinsichtlich ihrer Winkel stets gegenläufig verlaufenden Schrägen von Klemmring und Dichtung in Bezug auf die jeweiligen Kontaktflächen der Fittings. Dichtigkeit an Trennstellen der Dichtungsstellen wird durch eine spezielle Form der Überlappung erreicht, die eine freie Umfangsveränderung erlaubt. Die freie Umfangsveränderung der Dichtung bewirkt bei Montage der Rohrverbindung die geometrisch axiale Ausrichtung der Rohrteile, wobei die Flansche zwangsweise stets plan zueinander fixiert abgedichtet werden. Durch eine doppelte Keilform von Klemmring und Dichtelement entstehen höhere Dichtungspressungen und eine bessere Abdichtung, verglichen mit Dichtungen unter Verwendung einer einfachen Keilform von Klemmringen mit einer planen Dichtung. Wird für den keilförmigen Dichtungsquerschnitt ein Material verwendet, welches eine ausreichende Elastizität besitzt, wird die notwendige Umfangsvergrößerung für die beschriebene Funktion auch mit einer Ausführung der Dichtung ohne Umfangsunterbrechung einzig über deren elastische Umfangsverlängerung ermöglicht.

Bei der erfindungsgemäß vorgeschlagenen Rohrverbindung kann in vorteilhafter Weise der einteilige Dichtring oder der mehrteilige Dichtring aus PTFE, Kunststoffmaterial mit oder ohne Faserverstärkung, Gummi, Kunststoffmaterial mit Anteilen metallischen Materials, metallverstärkte Gummidichtungen oder als rein metallische Abdichtung ausgeführt sein.

Um die positiven Eigenschaften keilförmiger Dichtungen zu erweitern, bietet eine keilförmige Dichtung ohne Unterbrechung, jedoch mit einer umlaufenden Verstärkung in Gestalt eines Metall- oder Fasereinsatzes, der einer Dehnung entgegen wirkt, einen Winkelausgleich. Dadurch können Rohrverbindungen fixiert werden, deren Fittings nicht plan zueinander orientiert sind und durch die erfindungsgemäß vorgeschlagene Lösung spannungsfrei dichtend miteinander verbunden werden können. Dazu sollte der äußere Umfang der Dichtung kleiner sein, als der innere Umfang des montierten Klemmrings. Die Dichtung darf sich nicht am Klemmring abstützen, weswegen die Verstärkung die durch axiale Pressung erzeugte Zugkraft tangential zum Umfang aufnimmt. Eine radiale Position der Dichtung und der Klemmeinrichtung zueinander ist beim Winkelausgleich umlaufend gegenläufig orientiert, sodass die Dichtung auf der Seite der Rohrverbindung mit größerem Abstand der Dichtflächen nach innen zur Rohrachse wandert, während die Klemmeinrichtung an dieser Stelle nach außen radial weg von der Rohrachse wandert. An der radial gegenüberliegenden Seite mit entsprechend verkleinertem Abstand der Dichtflächen rutscht der Dichtring hingegen radial nach außen von der Rohrachse, während die Klemmeinrichtung an dieser Stelle nach innen in Richtung der Rohrachse wandert. Werden nicht vollständig genau fluchtende Rohre oder Rohrteile so verbunden, wird bei vollständiger Abdichtung durch gleichmäßigen Kontakt der schräg verlaufenden Dichtflächen mit radialer gegenläufiger Verschiebung der Dichtung und des Klemmrings zueinander, eine axiale Winkelabweichung zwischen den zu verbindenden Rohrteilen ausgeglichen und damit eine unzulässig hohe mechanische Verspannung im Rohrsystem sowie in der Dichtung bei deren Montage vermieden. Der spannungsfreie Winkelausgleich ist begrenzt durch den radialen Kontakt der Dichtung nach außen zum Klemmring und nach innen zu den Führungselementen der Fittings, für die Rotationsfixierung beziehungsweise Rotationspositionierung der einzelnen Rohrteile in Bezug aufeinander.

In einer weiteren Ausführungsvariante der erfindungsgemäß vorgeschlagenen Lösung umfasst die Rohrverbindung einen einteiligen Dichtring oder einen mehrteiligen Dichtring, der als Metallring mit keilförmigem Querschnitt mit balligen Dichtflächen ausgeführt ist oder als Flachdichtung in einem Rechteck-Querschnitt ausgeführt ist. Die Flachdichtung hat einen planen Rechteck-Querschnitt ohne Unterbrechung und ist nur geeignet für vertikal zueinander orientierte Dichtflächen. Sie ist in der Herstellung einfacher und kostengünstiger verglichen mit Dichtungen mit keilförmigem Querschnitt. Sie dichtet ohne Unterbrechung bei fluchtenden Rohrteilen mit einer definierten Verformung des Querschnitts ab, bis die axialen Anschläge beider Fittings zur Rotationsfixierung über die Kontraktion der Klemmeinrichtung auf der Gegenseite anliegen und sich die Rohrteile fluchtend in Bezug aufeinander ausgerichtet haben. Deshalb ist für diese Ausführungsvariante ein Keilwinkel von 0°, insbesondere bei dauerhaft elastischem Dichtungsmaterial wie Kunststoff oder Gummi, sehr gut geeignet. Gleichermaßen können auch Kreis- oder Oval-Querschnitte eingesetzt werden, wobei durch ihre linienförmigen Auflageflächen Dichtflächen und daraus folgender leichterer Verformbarkeit des Dichtungsquerschnitts über axiale Pressung in der Montage eine noch weiter verbesserte Abdichtung, insbesondere bei aufgerauten Dichtflächen, erreicht werden kann. Der Einsatzzweck derartiger Dichtungen liegt insbesondere bei weniger belasteten und weniger vorgespannten Rohrverbindungen.

Bei der erfindungsgemäß vorgeschlagenen Rohrverbindung kommt bei Ausbildung eines keilförmigen Querschnitts am einteiligen Dichtring oder am mehrteiligen Dichtring ein Keilwinkel zur Ausführung, sodass an dem einteiligen Dichtring oder dem mehrteiligen Dichtring eine erste Dichtfläche und eine zweite Dichtfläche vorliegen, die entsprechend dem Keilwinkel schräg verlaufen.

In besonders vorteilhafter Ausführung des keilförmigen Querschnitts beträgt der Keilwinkel zwischen 5° und 30°, besonders bevorzugt zwischen 10° und 15°. Es ist anzustreben, dass der Keilwinkel in einem Bereich oberhalb der Selbsthemmung liegt, bezogen auf den Reibwert der Materialpaarung zwischen Dichtungsoberfläche und Dichtfläche. Liegt der Reibwert unterhalb der Selbsthemmung, kann die Dichtung unter axialem Druck vom Zusammenziehen der schrägen Dichtflächen der Flansche aufgrund der Kontraktion des Klemmrings nicht nach außen gleiten bis zur radialen Anlage am Klemmring, der der Dichtung bei der Montage radial durch die entgegengesetzten Schrägen der Flanschklemmflächen entgegen kommt.

Bei der erfindungsgemäß vorgeschlagenen Rohrverbindung sind eine erste Dichtringhälfte und eine zweite Dichtringhälfte vorgesehen, die jeweils ein erstes Dichtringhälftenende und ein zweites Dichtringhälftenende aufweisen, deren Geometrien komplementär zueinander ausgeführt sind. Dadurch kann die Montage vereinfacht werden, zudem liegen bei der Montage Toleranzen vor, die eine einfache Handhabbarkeit der Herstellung der erfindungsgemäß vorgeschlagenen Rohrverbindung ermöglichen.

So können in Bezug auf die Dichtringhälften die jeweiligen Enden bei den Dichtringhälftenden so ineinander geführt werden, dass sich bei der Montage vorab vor Anzug von Klemmeinrichtungen eine erste Lücke und eine zweite Lücke ergibt. Die beiden Dichtringhälftenenden werden bei der Vormontage so montiert, dass die jeweiligen Dichtringhälftenenden entlang einer gemeinsamen Anlagefläche aneinander liegen. Beim späteren Verspannen erfolgt eine radiale Verschiebung der Dichtringhälftenenden dahingehend, dass bei Aufbringen der Axialkraft ein Schließen der ersten Lücke und der zweiten Lücke erfolgt, bis die Dichtringhälften am Klemmring radial anliegen und die Dichtwirkung vollständig hergestellt ist. Dabei entsteht ein Kräftegleichgewicht zwischen Dichtringhälften, Fittings und Klemmringen in axialer und radialer Endposition.

Bei der erfindungsgemäß vorgeschlagenen Rohrverbindung sind an den einander zuweisenden Enden der Rohrteile in Umfangsrichtung in alternierender Abfolge Vorsprünge und Ausnehmungen ausgebildet, die in Bezug aufeinander eine Komplementärgeometrie bilden. Die in Umfangsrichtung verlaufenden Ausnehmungen beziehungsweise die in Umfangsrichtung verlaufenden Vorsprünge können in gleichmäßiger Rasterung entlang der einander zuweisenden Enden der miteinander zu verbindenden Rohrteile ausgeführt sein, sodass zwischen diesen mehrere Verdrehungspositionen möglich sind. Sind hingegen an den einander zuweisenden Enden der Rohrteile, d. h. an deren Stirnflächen die Aussparungen und die Ausnehmungen ungleichmäßig über den Umfang jeweils des ersten Rohrteils und des zweiten Rohrteils in Umfangsrichtung verteilt ausgebildet, so können die beiden miteinander zu fügenden Rohrteile nur in einer Verdrehungsposition gefügt werden. In beiden Fällen sind die zu verbindenden Fittings, d. h. Rohrteile, identisch hinsichtlich der Anordnung von Vorsprüngen und Ausnehmungen, sodass an allen zu verbindenden Rohrenden identische Fittings montiert werden können; dies vereinfacht die Montage der Rohrbaugruppen und die Herstellung der erfindungsgemäß vorgeschlagenen Rohrverbindung.

Es besteht die Möglichkeit, an den einander zuweisenden Enden der miteinander im Rahmen der Rohrverbindung zu verbindenden Rohrteile, beispielsweise in Umfangsrichtung, sechs Vorsprünge und sechs Ausnehmungen auszubilden, die jeweils in 30°-Teilung ausgeführt sind. Daneben könnte auch eine Ausbildung der Komplementärgeometrie dahingehend erfolgen, dass beispielsweise an den miteinander zu fügenden Rohrteilen in Umfangsrichtung gesehen fünf Vorsprünge und fünf Ausnehmungen ausgeführt werden, sodass sich eine 36°-Teilung ergibt; es besteht die Möglichkeit in Umfangsrichtung vier Vorsprünge und vier Ausnehmungen anzuordnen, sodass eine 45°-Teilung derselben erfolgt. Werden hingegen an den einander zuweisenden Stirnseiten des ersten Rohrteils und des zweiten Rohrteils lediglich drei Vorsprünge und drei Ausnehmungen hergestellt, so ergibt sich eine 60°-Teilung derselben, wohingegen bei einer Ausbildung von zwei Vorsprüngen und zwei Ausnehmungen eine 90°-Teilung vorliegt. Die Rasterung, d. h. die Ausführung der Komplementärgeometrie, kann ab dem Vorsehen zweier Vorsprünge und zweier komplementärer Ausnehmungen die Funktion Rotationsfixierung bei einer Teilung von viermal 90° und zusätzlich die Funktion Rotationspositionierung bei ungleichmäßigen Winkeln, zum Beispiel zweimal 100° und zweimal 80°, der zu verbindenden identischen Flansche zueinander darstellen. Die Ausbildung einer kleineren Rasterung für größere Flanschdurchmesser ist möglich und erleichtert das Handling der Rohrteile bei der Herstellung der erfindungsgemäß vorgeschlagenen Rohrverbindung im Rahmen der Montage.

Die erfindungsgemäß vorgeschlagene Rohrverbindung kann auch dann eingesetzt werden, wenn nur eine begrenzte axiale Kompression erforderlich oder möglich ist. Für diesen Fall wird ein einteiliger Dichtring eingesetzt, der bevorzugt einen rechteckigen Querschnitt aufweist. Der den Rechteck-Querschnitt aufweisende einteilig ausbildete Dichtring liegt an einer ersten vertikal verlaufenden Stirnfläche und an einer dieser gegenüberliegenden zweiten vertikal verlaufenden Stirnfläche an. Aufgrund der Rechteck-Geometrie des einteiligen Dichtrings lässt sich mit dieser Ausführungsvariante eine axiale Kompression mit elastischem Dichtungsmaterial realisieren. Die Komplementärgeometrie aus Vorsprüngen und Ausnehmungen in in Umfangsrichtung alternierender Abfolge stützt den einteiligen Dichtring radial nach innen ab und bewirkt andererseits die Ausbildung einer Verdrehsicherung der beiden im Rahmen der erfindungsgemäß vorgeschlagenen Rohrverbindung miteinander zu verbindenden Rohrteile.

In Bezug auf die erfindungsgemäß vorgeschlagene Rohrverbindung können an einer Außenwand der miteinander im Rahmen der Rohrverbindung verbundenen Rohrteile jeweils mindestens eine Klammer oder mindestens eine Brücke zur Aufhängung der Rohrteile mit einem ersten Klammerkopf und einem zweiten Klammerkopf pro Spannring eingesetzt werden, über welche Spannringe am Umfang der Rohrverbindung fixiert werden.

In Weiterbildung der erfindungsgemäß vorgeschlagenen Lösung umfassen die Spannringe ein erstes Ende sowie ein zweites Ende, die jeweils verdickt ausgeführt sind und mit einer Schraubenkopf-Gegenstück-Geometrie versehen sind, welche zur Sicherung gegen Verdrehen des Schraubenkopfs dient und somit ein Gegenhalten des Anzugsmoments beim Anziehen erspart.

In Weiterbildung der erfindungsgemäß vorgeschlagenen Lösung können die Spannringe in ihrem Querschnitt auch als Klemmringe zur Verbindung der Rohrenden ausgeführt werden und somit neben der Befestigung des Rohrstrangs an der umgebenden Struktur des Luftfahrzeugs auch die Verbindung der Rohrenden übernehmen, was die Anzahl der benötigten Bauteile reduziert.

Bei der erfindungsgemäß vorgeschlagenen Rohrverbindung erstreckt sich entlang der Außenwand der beiden miteinander im Rahmen der Rohrverbindung gefügten und abgedichteten Rohrteile ein drahtförmiges Messelement. Das drahtförmige Messelement wird durchgängig über alle verbundenen Rohre hinweg installiert, nachdem alle Rohrverbindungen geschlossen wurden. Somit kann dieses in allen Halterungen entlang des Rohrsystems und in den Sensorgehäusen an jeder Rohrverbindung ohne Werkzeug über elastische Verschlüsse nachträglich montiert werden.

Bei der erfindungsgemäß vorgeschlagenen Rohrverbindung ist das drahtförmige Messelement, bei dem es sich beispielsweise um einen wärmeempfindlichen Lichtleiter handelt, durch eine oder mehrere aufklebbare oder montierbare, in einer Schlitzung in Längsrichtung zur Aufnahme aufweisende Schaumstoffabdeckungen gegen Beschädigungen von außen her geschützt.

Die Erfindung bezieht sich darüber hinaus auf die Verwendung der Rohrverbindung mit einem ersten Rohrteil und einem weiteren zweiten Rohrteil im Einsatz in einem Luftfahrzeug.

### Vorteile der Erfindung

Die erfindungsgemäß vorgeschlagene Rohrverbindung erlaubt den längeren Einsatz empfindlicher Materialien für Dichtungen auch bei rauen Betriebsbedingungen, da bei allen Ausführungsvarianten die Dichtung in ihrer Dichtposition geschützt, abgestützt und gesichert ist. Dies erfolgt durch sie komplett umschließende Flächen des Klemmrings beziehungsweise der Flansche, insbesondere in Richtung der eventuell heißen, unter Druck stehenden und chemisch aggressiven Medien, die im Rohrinneren der Rohrverbindungen strömen.

Die erfindungsgemäß vorgeschlagene Rohrverbindung erlaubt den Einsatz einer einzigen Rohrteilvariante pro gewähltem Rohrdurchmesser, da bei jeder der erfindungsgemäß hergestellten Rohrteile mehrere Vorsprünge sowie Ausnehmungen in Umfangsrichtung verteilt ausgebildet sind. Werden diese Vorsprünge beziehungsweise Ausnehmungen gleichmäßig in Umfangsrichtung an den Stirnflächen der miteinander im Rahmen der Rohrverbindung zu verbindenden Rohrteile gefertigt, kann die Verdrehungsposition der Rohrteile relativ zueinander bei der Installation gerastert werden. Damit stehen mehrere Verdrehungspositionen zur Verfügung. Werden diese Bereiche, d. h. die an den Stirnseiten der miteinander im Rahmen der erfindungsgemäß vorgeschlagenen Rohrverbindung zu fügenden Rohrteile hingegen ungleichmäßig in Umfangsrichtung ausgebildet, ist alternativ die Realisierung einer eindeutigen Verdrehungsposition der beiden Rohrteile in Bezug aufeinander bei der Installation möglich.

Bei der erfindungsgemäß vorgeschlagenen Lösung sind keine weiteren Vorkehrungen erforderlich, um die exakten Verdrehungspositionen der beiden miteinander zu fügenden Rohrteile zu definieren. Insbesondere ist bei der erfindungsgemäß vorgeschlagenen Lösung das Vorhalten zweier voneinander verschiedener Rohrteil-Geometrien im Design und in der Fertigung obsolet.

Die dargestellten Varianten der erfindungsgemäß vorgeschlagenen Rohrverbindung, entweder mit vertikal oder schräg verlaufenden Dichtflächen, mit sich radial nach außen bis zum Anschlag an die Klemmeinrichtung verschiebenden Dichtungen garantieren bei Montage eine axiale Fluchtung der so miteinander verbundenen Rohre beziehungsweise Rohrteile. Bei Rohren mit den gleichen Flanschen und schräg verlaufenden Dichtflächen kann nur durch Einsatz einer anderen Dichtungsart, die umlaufend geschlossen und durch Verstärkungen im Umfang nicht oder nur gering dehnbar ausgeführt ist, eine spannungsfreie und dichtungsschonende Montage in einem von der axialen Fluchtung abweichenden Winkel der verbundenen Rohre erfolgen. Die Wahl der zum jeweiligen Einsatzzweck passenden korrespondierenden Dichtungsart kann somit auch erst während der Endmontage der Rohrteile und der Herstellung der erfindungsgemäß vorgeschlagenen Rohrverbindung erfolgen, sodass unerwartete geometrische Abweichungen im Rohrsystem kurzfristig ausgeglichen werden können.

Die erfindungsgemäß vorgeschlagene Rohrverbindung erlaubt den Einsatz von Spannringen mit dem Querschnitt der Klemmringe zur Verbindung der Rohrenden. Neben der Befestigung des Rohrstrangs an der umgebenden Struktur des Luftfahrzeugs kann gleichzeitig auch die Verbindung der Rohrenden unter Beibehaltung der beschriebenen Vorteile aller Varianten der Dichtungen und Flanschformen mit nur einem Bauteil realisiert werden. Das reduziert die Anzahl der benötigten Bauteile. Die axiale Position der Strukturanbindung und die axiale Position der Rohrverbindung müssen für diesen Fall übereinstimmen, die radiale Position der Strukturanbindung ist jedoch frei wählbar bei einer kreisförmigen Rohrgeometrie.

### Kurze Beschreibung der Zeichnungen

Anhand der Zeichnung wird die Erfindung nachstehend eingehender beschrieben.

Es zeigt:
- Figur 1: eine erste Ausführungsvariante ("NOGuideVersion") einer nicht von den Ansprüchen abgedeckten, nicht erfinderischen Rohrverbindung in perspektivischer Ansicht,
- Figur 2: einen Schnitt durch die Rohrverbindung gemäß der Darstellung in Figur 1,
- Figur 3: ein Detail eines mehrteiligen Dichtrings im Bereich von dessen Dichtringhälftenenden,
- Figur 4: eine perspektivische Draufsicht auf den mehrteiligen Dichtring,
- Figur 5: eine perspektivische Ansicht einer zweiten Ausführungsvariante ("GuideVersion") der erfindungsgemäß vorgeschlagenen Rohrverbindung,
- Figur 6: eine teilweise Innenansicht eines Rohrteils mit an der Stirnseite dargestellten gerastert angeordneten Vorsprüngen beziehungsweise Ausnehmungen und einer schräg verlaufenden Dichtfläche,
- Figur 7: eine Detailansicht der Innenseite der gefügten Rohrverbindung gemäß der zweiten Ausführungsvariante,
- Figur 8: eine Detailansicht einer vertikal verlaufenden Dichtfläche für eine Flachdichtung,
- Figur 9: die Darstellung einer dritten Ausführungsvariante ("FlatVersion") mit einem flachen einteiligen Dichtring,
- Figur 10: eine Detailansicht der dritten Ausführungsvariante der erfindungsgemäß vorgeschlagenen Rohrverbindung,
- Figur 11: eine perspektivische Ansicht einer Klammer zur Fixierung eines Spannrings am Umfang der Rohrverbindung,
- Figur 12: eine Brücke mit einem ersten Klammerkopf und einem zweiten Klammerkopf,
- Figur 13: die perspektivische Ansicht eines Spannrings,
- Figur 14: eine Darstellung eines Temperatursensors am Außenumfang der erfindungsgemäßen Rohrverbindung, und
- Figur 15: eine Zusammenstellungszeichnung sämtlicher Komponenten der erfindungsgemäßen Rohrverbindung.

### Ausführungsvarianten der Erfindung

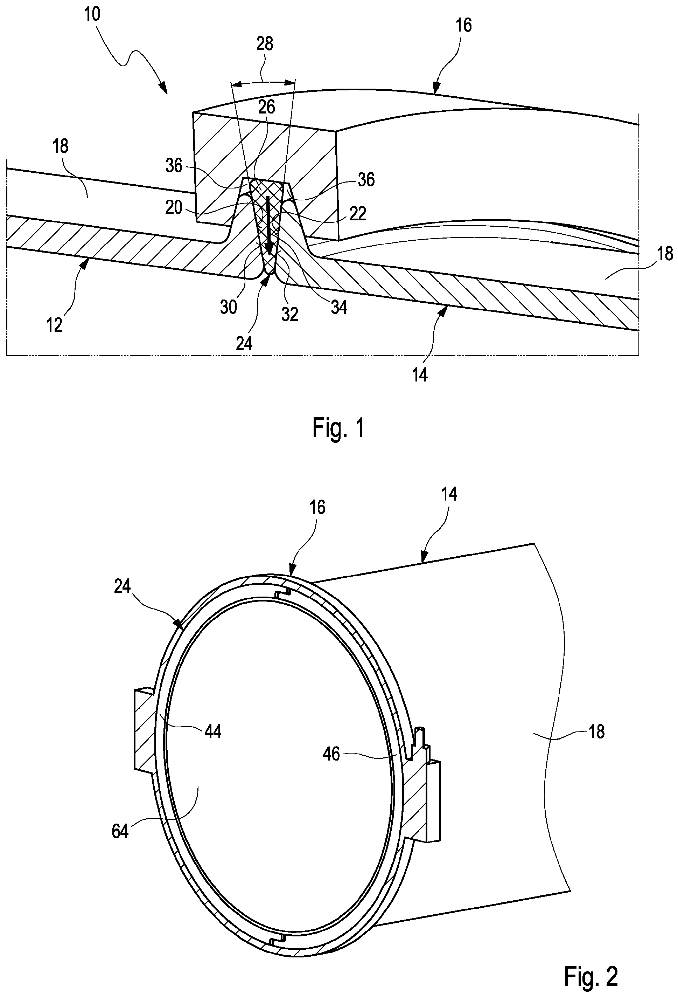

Der Darstellung gemäß Figur 1 ist in perspektivischer Widergabe eine Darstellung der ersten Ausführungsvariante einer nicht von den Ansprüchen abgedeckten, nicht erfinderischen Rohrverbindung zu entnehmen.

An einer ersten Rohrverbindung 10 sind ein erstes Rohrteil 12 und ein zweites Rohrteil 14 miteinander verbunden und abgedichtet. Dazu umschließt eine ringförmig ausgebildete Klemmeinrichtung 16 eine Außenwand 18 im Bereich einer ersten Stirnfläche 20 des ersten Rohrteils 12 und einer zweiten Stirnfläche 22 in Bezug auf das zweite Rohrteil 14. Aus der Darstellung gemäß Figur 1 geht hervor, dass zwischen der ersten Stirnfläche 20 und der zweiten Stirnfläche 22 ein Dichtring 24 aufgenommen ist. Bei dem Dichtring 24 handelt es sich um einen mehrteiligen Dichtring, der eine erste Dichtringhälfte 44 und eine zweite Dichtringhälfte 46 umfasst. In der Ausführungsvariante gemäß Figur 1 hat der mehrteilige Dichtring 24 einen keilförmigen Querschnitt 26. Ein Keilwinkel 28 liegt im Bereich zwischen 5° und 30°, bevorzugt zwischen 10° und 20°. Aufgrund des Keilwinkels 28, in dem der keilförmige Querschnitt 26 am mehrteiligen Dichtring 24 ausgebildet ist, verlaufen eine erste seitliche Dichtfläche 30 und eine zweite seitliche Dichtfläche 32 geneigt. Die Neigung der ersten Dichtfläche 30 und der zweiten Dichtfläche 32 entspricht bevorzugt einer Neigung, die die erste Stirnfläche 20 am ersten Rohrteil 12 sowie die zweite Stirnfläche 22 am zweiten Rohrteil 14 aufweist.

An ihrer den Stirnflächen 20, 22 zuweisenden offenen Seite weist die Klemmeinrichtung 16 Schrägen auf, die komplementär zu Schrägen der ersten Stirnfläche 20 des ersten Rohrteils 12 und der zweiten Stirnfläche 22 des zweiten Rohrteils 14 ausgebildet sind. Beim Spannen der Klemmeinrichtung 16 in tangentialer Richtung wird durch den radialen Kontakt mit der Klemmeinrichtung 16 auf den Dichtring 24 eine Radialkraft 34 übertragen, die den mehrteilig ausgebildeten Dichtring 24 mit seinen Dichtflächen 30, 32 zwischen die erste Stirnfläche 20 und die zweite Stirnfläche 22 hineindrückt, sodass der Dichtring 24 im Bereich einer Trennfuge des ersten Rohrteils 12 und des zweiten Rohrteils 14 in einem geometrischen Dreieck der Kontaktflächen fixiert wird und die Rohrverbindung abdichtet. Figur 1 zeigt darüber hinaus, dass zwischen dem oberen Bereich des mehrteiligen Dichtrings 24 und der Ausnehmung innerhalb der Klemmeinrichtung 16 ein Freiraum 36 verbleibt, der beispielsweise zur Unterbringung eines Wärmesensors genutzt werden kann oder in der gezeigten Ausführung zum Sammeln der Undichtigkeiten entlang der Dichtung dient, um diese einem Wärmesensor, der parallel zur Rohrachse verlegt ist, an der Kreuzung von Dichtung und Wärmesensor konzentriert zuzuführen.

Figur 2 zeigt ebenfalls in perspektivischer Ansicht einen Teil der ersten Rohrverbindung gemäß der perspektivischen Darstellung in Figur 1.

Aus der perspektivischen Ansicht gemäß Figur 2 geht hervor, dass der mehrteilige Dichtring 24 die erste Dichtringhälfte 44 und die zweite Dichtringhälfte 46 umfasst. Diese sind gemäß Figur 2 von der Klemmeinrichtung 16 umschlossen.

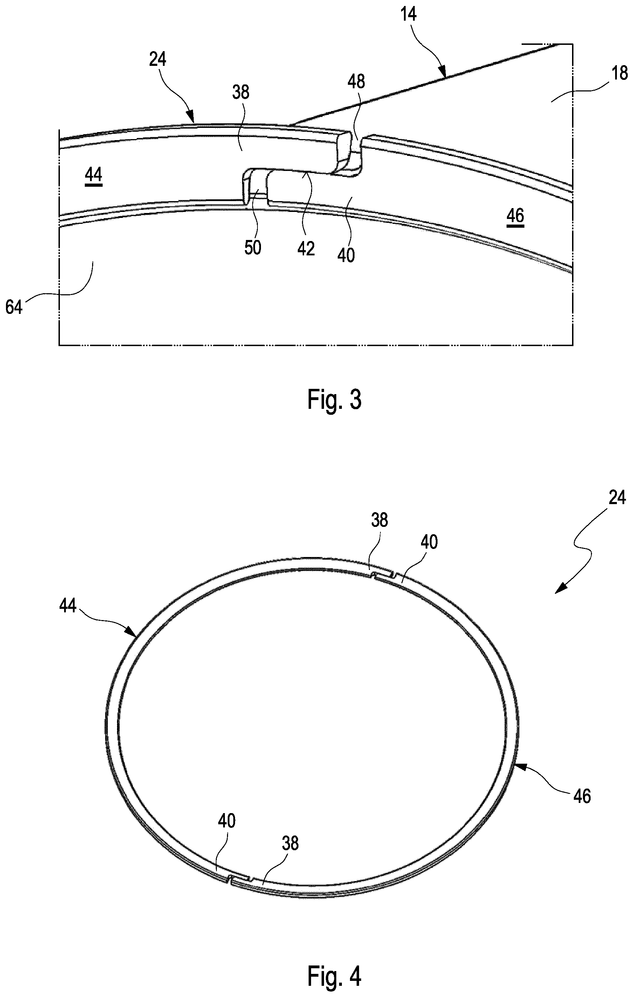

Aus der Detailansicht gemäß Figur 3 gehen Dichtringhälftenenden 38, 40 hervor, die der Dichtposition im Rahmen einer Vormontage die in Figur 3 dargestellten Positionen in Bezug aufeinander einnehmen. Entlang einer Lagerfläche 42 liegen die Dichtringhälftenenden 38, 40 aneinander auf und bilden eine erste Lücke 48 und eine zweite Lücke 50 am jeweils anderen der Dichtringhälftenenden 38, 40.

Wird bei Einleitung einer Kraft in die Klemmeinrichtung 16 diese radial gespannt, so gleiten die jeweiligen Dichtringhälften 44, 46 radial nach außen bis zur Anlage an die Klemmeinrichtung 16, wobei sich die erste Lücke 48 beziehungsweise die zweite Lücke 50 erweitert für den vergrößerten Umfang und sich der Kontakt entsprechend verkürzt, ohne die Dichtwirkung zu verlieren, da auch in diesen überlappenden Bereichen der Dichtungen der keilförmige Querschnitt beider Dichtungen zusammen nach außen bis zum Anschlag an die Klemmeinrichtung 16 gepresst ist und damit den Kontakt sicherstellt. Aus der Darstellung gemäß Figur 2 geht hervor, dass die Dichtringhälftenenden 38, 40 in einer 180°-Teilung ausgebildet sind, d. h. sich bezogen auf den Umfang der Klemmeinrichtung 16 einander gegenüberliegen.

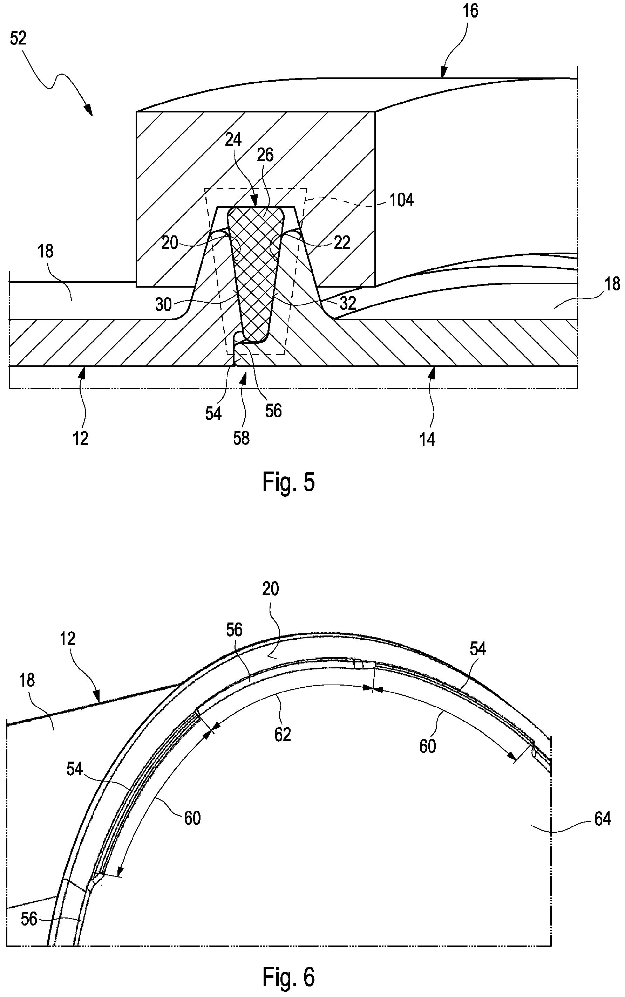

Figur 4 zeigt eine Draufsicht auf den mehrteilig ausgebildeten Dichtring 24 mit erster Dichtringhälfte 44 und zweiter Dichtringhälfte 46. Der Darstellung gemäß Figur 4 ist der in diesem Fall zweiteilig ausgebildete Dichtring 24 zu entnehmen, der einen keilförmigen Querschnitt 26 aufweist. Die Darstellung gemäß Figur 4 entspricht im Wesentlichen den Darstellungen in den vorangegangenen Figuren 2 und 3, lediglich der Durchmesser des hier zweiteilig ausgebildeten Dichtrings 24 ist leicht verändert aufgrund der Komplementärgeometrie 58 an den Stirnseiten der Rohrteile 12, 14, vgl. Darstellung gemäß Figur 5. Da gemäß Figur 5 der mehrteilige Dichtring 24 durch ein umschließendes geometrisches nicht rechteckiges Viereck 104 umschlossen ist, sodass eine wesentliche Veränderung vom Durchmesser des mehrteiligen Dichtrings 24 nicht möglich ist, ergibt die Verwendung einer einteiligen keilförmigen Dichtung eine gesicherte Dichtigkeit unter höherem Innendruck der Rohrverbindung verglichen mit einem mehrteilig ausgebildetem Dichtring 24.

Figur 5 zeigt eine weitere, zweite Ausführungsvariante der erfindungsgemäß vorgeschlagenen Rohrverbindung.

Aus Figur 5 geht hervor, dass bei einer zweiten Rohrverbindung 52 an der ersten Stirnfläche 20 beziehungsweise an der zweiten Stirnfläche 22 eine Komplementärgeometrie 58 ausgeführt ist. Diese umfasst Vorsprünge 54 und Ausnehmungen 56 (vergleiche Figur 6). Aus Figur 5 geht hervor, dass beispielswiese am zweiten Rohrteil 14 der Vorsprung 54 ausgeführt ist, der in eine diesem gegenüberliegende komplementäre Ausnehmung 56 unterhalb der ersten Stirnfläche 20 des ersten Rohrteils 12 eingreift. Die jeweils ausgebildeten Vorsprünge 54 beziehungsweise Ausnehmungen 56 sind die besagte Komplementärgeometrie 58. Auch bei der zweiten Rohrverbindung 52 drückt die Klemmeinrichtung 16 auf die Oberseite des hier mehrteilig ausgebildeten Dichtrings 24 und stellt diesen mit seiner jeweiligen ersten Dichtfläche 30 und seiner zweiten Dichtfläche 32 gegen die schräg ausgebildete erste Stirnfläche 20 des ersten Rohrteils 12 sowie die schräg ausgebildete Stirnfläche 22 des zweiten Rohrteils 14 an.

Mit Bezugszeichen 104 ist ein umschließendes geometrisches nicht rechteckiges Viereck bezeichnet, innerhalb dessen der einteilige oder mehrteilige Dichtring 24, 68 den keilförmigen Querschnitt 26 in seiner Dichtposition zwischen der Klemmeinrichtung 16 sowie den beiden schräg verlaufenden Stirnseiten 20, 22 und den sich abwechselnden Vorsprüngen 54 der Rohrteile 12 und 14 fixiert.

Figur 6 zeigt eine perspektivische Innenansicht eines ersten Rohrteils 14 an dessen Stirnseite die Komplementärgeometrie 58 ausgeführt ist. Aus der perspektivischen Ansicht gemäß Figur 6 geht hervor, dass sich in Umfangsrichtung des der Außenwand 18 des ersten Rohrteils 12 gesehen, Vorsprünge 54 in Umfangsrichtung erstrecken, an die sich wiederum eine Ausnehmung 56 erstreckt, an die sich wiederum ein Vorsprung 54 erstreckt und so fort. In der Ausführungsvariante gemäß Figur 6, d. h. im Rahmen der zweiten Rohrverbindung 52, sind beispielsweise in Umfangsrichtung auf das erste Rohrteil gesehen, sechs Vorsprünge 54 à 30° Umfangsteil 60 ausgebildet und sechs 30°-Umfangsteile 62 in Bezug auf die Ausnehmung 56. Dies bedeutet, dass sich an beiden Stirnseiten des ersten Rohrteils 12 und des zweiten Rohrteils 14 in Umfangsrichtung abwechselnd jeweils sechs Vorsprünge 54 und sechs Ausnehmungen 56 erstrecken. Diese können, da sie gleichmäßig angeordnet sind, in jeder beliebigen Verdrehposition in Bezug aufeinander im Rahmen der Komplementärgeometrie 58 gefügt werden. Alternativ besteht selbstverständlich auch die Möglichkeit, an den jeweiligen Stirnseiten des ersten Rohrteils 12 sowie des zweiten Rohrteils 14 eine andere Anzahl von Vorsprüngen 54 und Ausnehmungen 56 im Rahmen alternativer Komplementärgeometrien 58 auszubilden. So könnten beispielsweise in Umfangsrichtung der Rohrteile 12, 14 gesehen, fünf Vorsprünge 54 und fünf Ausnehmungen 56 in alternierender Folge ausgeführt werden, sodass sich eine Teilung von 36° ergäbe. Alternativ bestünde auch die Möglichkeit, an den einander gegenüberliegenden Stirnseiten des ersten Rohrteils 12 sowie des zweiten Rohrteils 14, jeweils vier Vorsprünge und in alternierender Abfolge zu diesen vier Ausnehmungen 56 in Umfangsrichtung auszubilden, die beispielsweise in diesem Fall in einer 45°-Teilung ausgeführt würden. Des Weiteren könnten an den Stirnseiten der beiden einander gegenüberliegenden Rohrteile 12, 14 jeweils drei Vorsprünge 54 und drei Ausnehmungen 56 in alternierender Abfolge in 60°-Teilung ausgebildet werden. Schließlich bestünde auch die Möglichkeit, an den einander zuweisenden Stirnseiten des ersten Rohrteils 12 sowie des zweiten Rohrteils 14 jeweils zwei Vorsprünge 54 vorzusehen, die sich mit zwei Ausnehmungen 56 abwechseln, sodass eine 90°-Teilung vorläge. Wird hingegen eine ungleichmäßige Verteilung in Umfangsrichtung gesehen von Vorsprüngen 54 und Ausnehmungen 56 gewählt, so können die beiden einander zuweisenden Stirnseiten des ersten Rohrteils 12 und des zweiten Rohrteils 14 nur in einer einzigen festgelegten definierten Drehposition miteinander montiert werden. Sind hingegen die Stirnseiten der beiden miteinander zu fügenden Rohrteile 12, 14 gleichmäßig gerastert ausgeführt, wie oben stehend dargelegt, so lassen sich innerhalb des Rasters alle Verdrehungspositionen in Bezug auf die beiden Rohrteile 12, 14 zueinander realisieren.

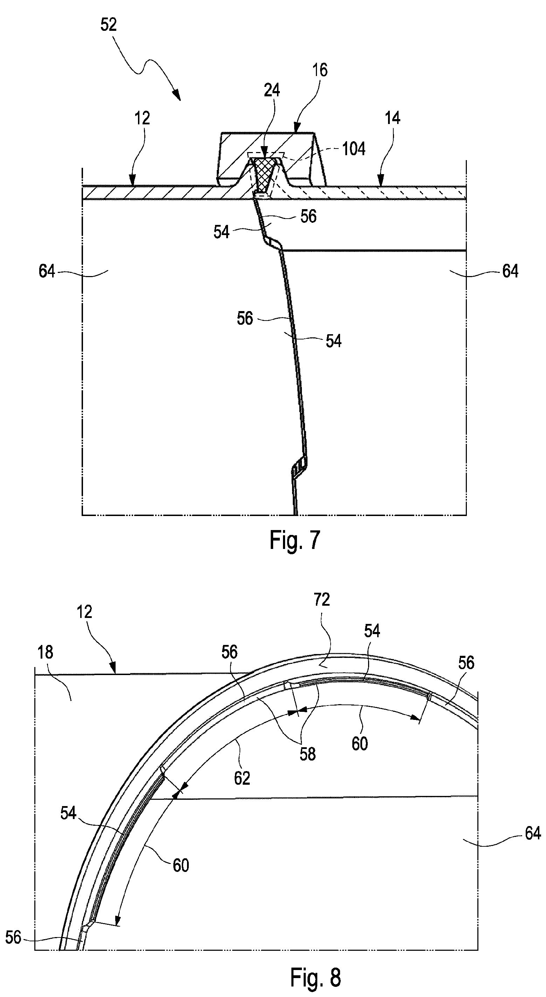

Figur 7 zeigt eine Innenansicht der zweiten Rohrverbindung 52.

Figur 7 ist zu entnehmen, dass im Bereich einer Trennfuge an der Innenwandung 64 des ersten Rohrteils 12 und des zweiten Rohrteils 14 jeweils Vorsprünge 54 in Ausnehmung 56 eingreifen und umgekehrt. Es bildet sich die in Figur 7 dargestellte in der Innenwandung 64 verlaufende Trennfuge aus. Die beiden Rohrteile 12, 14 gemäß Figur 7 werden im Rahmen der zweiten Rohrverbindung 52 miteinander verbunden. Durch die Klemmeinrichtung 16, die den mehrteiligen Dichtring 24 umschließt, wird auf diesen eine Radialkraft ausgeübt, welche den einteiligen oder mehrteiligen Dichtring 24, 68 zwischen die einander zuweisenden ersten und zweiten Stirnflächen 20, 22 des ersten Rohrteils 12 sowie des zweiten Rohrteils 14 hineindrückt. Mit Position 104 ist wiederum das umschließende geometrische nicht rechteckige Viereck bezeichnet, welches durch die Innenseite der Klemmeinrichtung 16 sowie durch die schräg verlaufenden Stirnflächen 20, 22 an den Rohrteilen 12, 14 sowie den Vorsprung 54 der Komplementärgeometrie 58 gebildet ist.

Der Darstellung gemäß Figur 8 ist die Komplementärgeometrie 58 zu entnehmen. Diese umfasst in alternierender Abfolge angeordnete Vorsprünge 54 sowie zu diesen korrespondierende Ausnehmungen 56, die an den miteinander die erfindungsgemäß vorgeschlagenen Rohrverbindungen bildenden Rohrteilen 12, 14 ausgebildet sind. Wie aus Figur 8 hervorgeht, ist ein 30°-Umfangsteil 60 entsprechend dem Vorsprung 54 komplementär zu einem 30°-Umfangsteil 62 in Bezug auf eine Ausnehmung 56 dargestellt. Beim Fügen des ersten Rohrteils 12 mit dem zweiten Rohrteil 14 bildet sich durch die Komplementärgeometrie 58, wie sie in Figur 8 angedeutet ist, eine Verdrehsicherung beziehungsweise eine Positionsfixierung des ersten Rohrteils 12 in Bezug auf das zweite Rohrteil 14. Mit Bezugszeichen 72 ist in der Darstellung gemäß Figur 8 eine erste vertikale Stirnfläche des ersten Rohrteils 12 bezeichnet, welches in die Außenwand 18 übergeht.

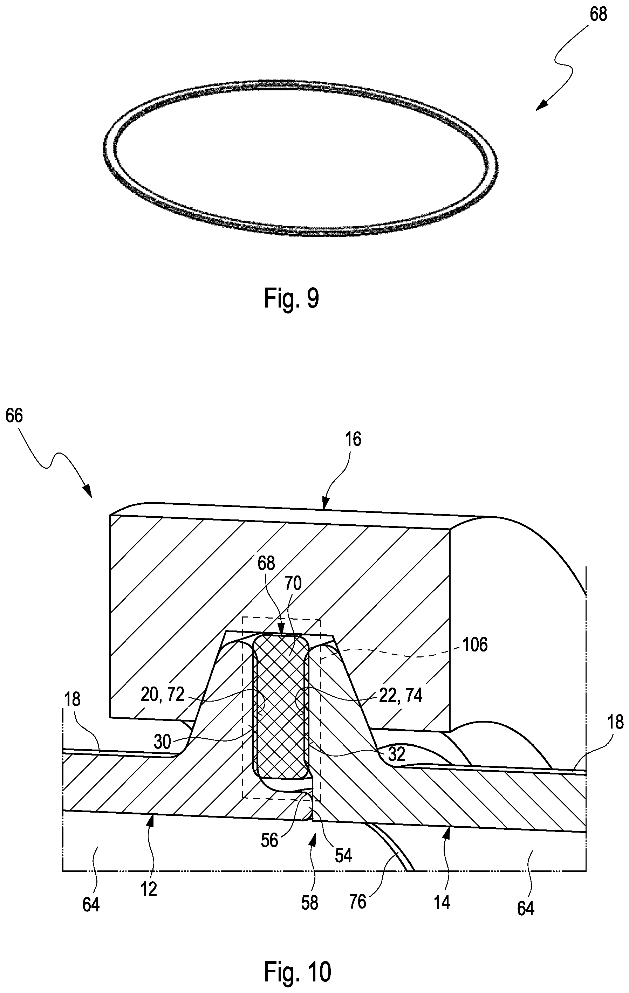

Figur 9 zeigt eine perspektivische Draufsicht auf einen einteiligen geschlossenen Dichtring 68. Dieser dient der Abdichtung einer dritten Rohrverbindung 66, wie sie beispielhaft in Figur 10 dargestellt ist. Der Darstellung gemäß Figur 10 ist eine dritte Ausführungsvariante der erfindungsgemäß vorgeschlagenen Rohrverbindung in Gestalt einer dritten Rohrverbindung 66 zu entnehmen. Die in Figur 10 dargestellte dritte Rohrverbindung 66 wird bevorzugt dann gewählt, wenn ein begrenzter Raum für eine axiale Kompression im Rahmen der Herstellung einer dritten Rohrverbindung 66 zur Verfügung steht. Im Unterschied zu den vorstehend beschriebenen Ausführungsvarianten weist der hier eingesetzte geschlossene einteilige Dichtring 68 einen Rechteck-Querschnitt 70 auf. Der einteilige Dichtring 68 wird beispielsweise aus einem Material wie PTFE gefertigt und hat eine Querschnittsfläche von 5 mm x 2 mm. Im Unterschied zu der ersten Rohrverbindung 10 beziehungsweise zu der zweiten Rohrverbindung 52 sind bei der dritten Rohrverbindung 66 gemäß der Darstellung in Figur 10 die erste Stirnfläche 20 beziehungsweise die zweite Stirnfläche 22 des ersten Rohrteils 12 beziehungsweise des zweiten Rohrteils 14 mit vertikal verlaufenden Flanken 72 beziehungsweise 74 versehen. An diesen, im Gegensatz zu den geneigt verlaufenden Stirnflächen 20, 22 gemäß der ersten Rohrverbindung 10 und der zweiten Rohrverbindung 52, liegen bei der in Figur 10 dargestellten dritten Rohrverbindung 66 die Längsseiten des einteiligen Dichtrings 68 an den vertikal verlaufenden Flanken 72, 74 der ersten Stirnfläche 20 und der zweiten Stirnfläche 22 an. Darüber hinaus stoßen unterhalb des einteiligen Dichtrings 68 die an dem ersten Rohrteil 12 beziehungsweise dem zweiten Rohrteil 14 ausgebildeten Vorsprünge 54 beziehungsweise Ausnehmungen 56 ineinander und bilden eine Trennfuge 76 in der Innenwandung 64 der beiden miteinander im Rahmen der dritten Rohrverbindung 66 verbundenen Rohrteile 12, 14. Analog zu der ersten Rohrverbindung 10 sowie der zweiten Rohrverbindung 52 wird durch die Klemmeinrichtung 16 eine Radialkraft auf den einteiligen Dichtring 68 aufgebracht, der diesen in den Zwischenraum zwischen der ersten vertikalen Flanke 72 an der ersten Stirnfläche 20 des ersten Rohrteils 12 und der zweiten vertikal verlaufenden Flanke 74 der zweiten Stirnfläche 22 des zweiten Rohrteils 14 eindrückt, sodass die Abdichtung an der Trennfuge 76 gegeben ist. Durch das Spannen der Klemmeinrichtung 16 entsteht in der gezeigten Ausführung einer dritten Rohrverbindung 66 durch die vertikalen Stirnflächen 72, 74 keine radiale Kraft auf den einteiligen geschlossenen Dichtring 68 nach außen, sodass die Vorsprünge 54 einerseits die Aufgabe haben, zu verhindern, dass der einteilige Dichtring 68 oder Bereiche des einteiligen Dichtrings 68 nach innen in die Strömung des Mediums fallen und dabei das durch die dritte Rohrverbindung 66 transportierte Medium verunreinigen oder bremsen und andererseits die Verformung des elastischen einteiligen Dichtrings 68 durch axiale Pressung begrenzen, indem die Vorsprünge 54 in den gegenüberliegenden Aussparungen 56 anliegen und so den einteiligen Dichtring 68 vor Beschädigung bei der Montage schützen. Eine weitere Aufgabe der in der beschriebenen Ausführung der dritten Rohrverbindung 66 in den Ausnehmungen 56 anliegenden Vorsprünge 54 ist die Übertragung von äußeren axialen Kräften vom ersten Rohrteil 12 auf das zweite Rohrteil 14 und umgekehrt und dabei den elastischen einteiligen Dichtring 68 vor diesen zusätzlichen axialen Druckbelastungen zu schützen und die dritte Rohrverbindung 66 trotz des Einsatzes des elastischen einteiligen Dichtrings 68 axial zu versteifen. Gemäß Figur 10 ergibt sich ein umschließendes geometrisches rechteckiges Viereck 106 aufgrund der vertikalen Stirnflächen 72, 74 der Rohrteile 12, 14.

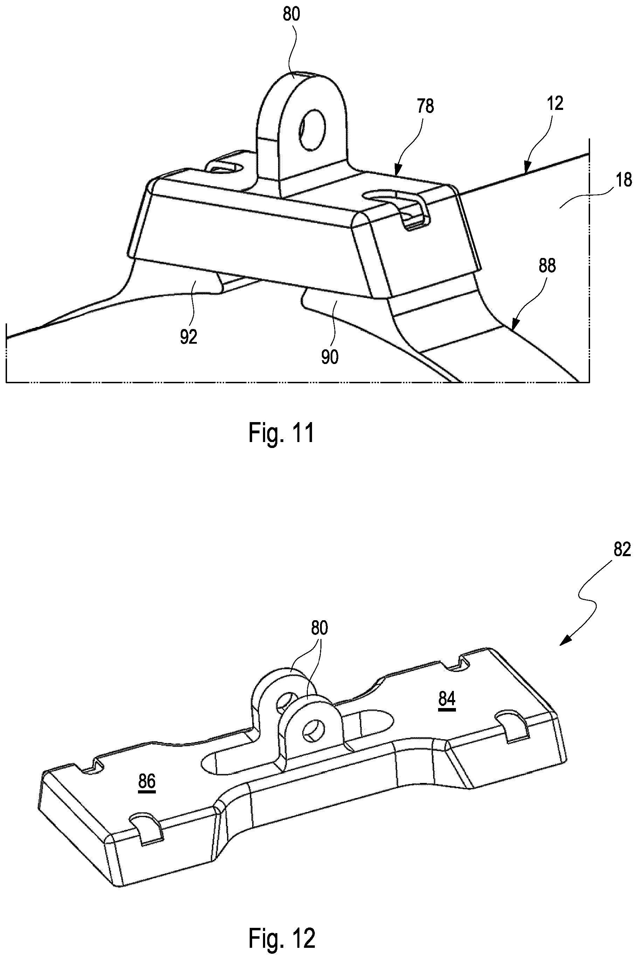

Der Darstellung in Figur 11 ist eine Klammer 78 zu entnehmen, die eine Anbindungsstelle 80 aufweist, die in Form einer Öse ausgebildet ist. Figur 12 zeigt in perspektivischer Ansicht eine Brücke 82 für größere oder überwiegend axiale Haltekräfte am Umfang der Außenwand 18, die an ihrer Oberseite eine verstärkte Anbindungsstelle 80 analog zur Klammer 78 aufweist und darüber hinaus mit einem ersten Klammerkopf 84 sowie einem diesem gegenüberliegenden zweiten Klammerkopf 86 für zwei an der Außenwand 18 axial versetzte Spannringe 88 versehen ist.

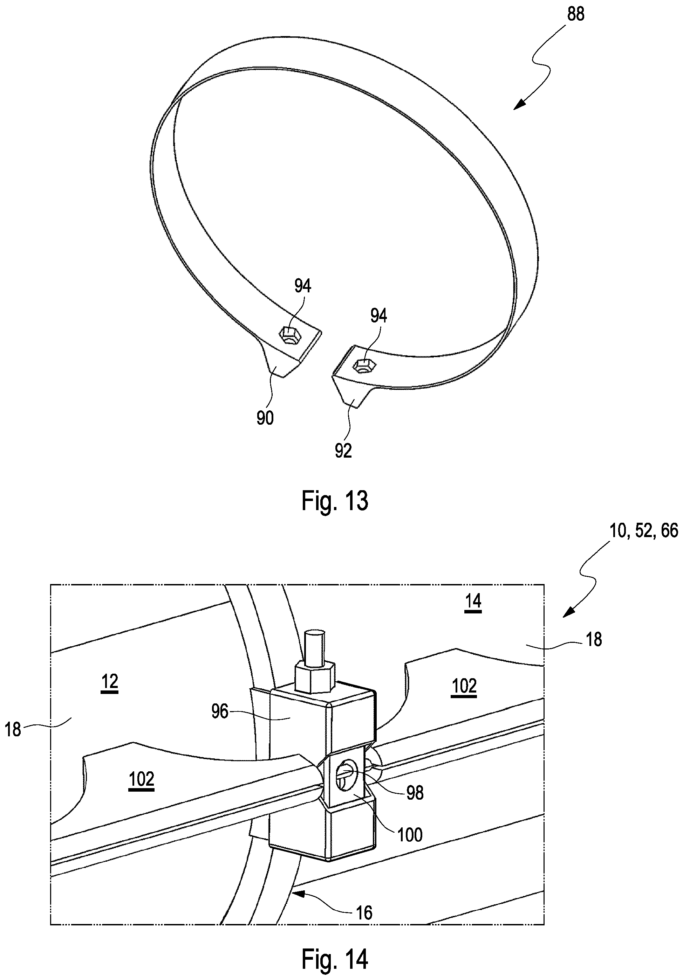

Mit den in den Figuren 11 und 12 in perspektivischer Wiedergabe dargestellten Klammern 78 beziehungsweise Brücken 82 können Spannringe 88, wie sie in Figur 13 in perspektivischer Wiedergabe dargestellt sind, am Umfang der Außenwand 18 einer jeden der Rohrverbindungen 10, 52 beziehungsweise 66 in beliebiger Position und Rotation fixiert werden, was die Rohrstücke komplex befestigter Rohre vereinheitlicht und vereinfacht. Figur 13 zeigt darüber hinaus, dass ein erstes Ende 90 sowie ein zweites Ende 92 des Spannrings 88 verdickt ausgebildet sind. In die verdickt ausgebildeten ersten Enden 90 beziehungsweise zweiten Enden 92 sind Schraubenkopf-Gegenstück-Geometrien 94 eingelassen. Diese machen den Einsatz eines Werkzeugs zum Gegenhalten bei Herstellung einer Schraubverbindung überflüssig, da die Gegenhaltekraft für das Verbindungselement Schraube durch die Schraubenkopf-Gegenstück-Geometrie 94 aufgebracht wird. Erste und zweite Enden 90, 92 der Spannringe 88 sind keilförmig ausgeführt, was beim Anziehen von Montagemuttern auf der Oberseite der Klammer 78 oder der Brücke 82 zur Verkürzung des Spannrings 88 bis zu dessen Klemmung auf der Außenwand 18 führt. Diese Funktion des Spannrings 88 gleicht der Funktion des Klemmrings 16, deshalb können die Funktionen beider Ringe auch in einer Ausführung vereint werden, um Bauteile und Gewicht einzusparen. Dazu wird der Spannring 88 am Umfang nicht flach wie in Figur 13 ausgeführt, sondern erhält den Querschnitt des Klemmringes 16 wie in den Figuren 1, 5, 7 oder 10.

Figur 14 zeigt eine schematische Anordnung eines Temperatursensors, der sich außen am Umfang einer ersten Rohrverbindung 10, einer zweiten Rohrverbindung 52 oder auch einer dritten Rohrverbindung 66 befindet. Bevorzugt wird ein Sensorgehäuse 96 des Temperatursensors, das über die sich in Umfangsrichtung der Außenwand 18 erstreckende Klemmeinrichtung 16 befestigt wird, wie in Figur 14 dargestellt. Für die Anordnung des Temperatursensors ist es unerheblich, ob die Klemmeinrichtung 16 Teil der ersten Rohrverbindung 10, der zweiten Rohrverbindung 52 oder der dritten Rohrverbindung 66 zum Verbinden des ersten Rohrteils 12 mit dem zweiten Rohrteil 14 ist. Figur 14 zeigt, dass durch das Sensorgehäuse 96 ein drahtförmiges Messelement 98 verläuft. Dieses drahtförmige Messelement 98 erstreckt sich durch einen elastischen Sensorhalter 100, der beispielsweise aus Silikon gefertigt ist, während das Sensorgehäuse 96 ein Kunststoffspritzgussteil sein kann. Figur 14 zeigt, dass beidseits des Sensorgehäuses 96 das drahtförmige Messelement 98 durch Schaumstoffabdeckungen 102 abgedeckt, fixiert und geschützt wird. Bei den Schaumstoffabdeckungen 102 handelt es sich um Kunststoffbauteile, die eine sich im Wesentlichen in Längsrichtung erstreckende schlitzförmige Öffnung aufweisen, in welche das zu schützende drahtförmige Messelement 98 eingedrückt oder eingeschoben werden kann. Die Schaumstoffabdeckungen 102 halten sich auf der Außenwand 18 des ersten Rohrteils 12 oder auch des zweiten Rohrteils 14, sodass das drahtförmige Messelement 98 in seiner ursprünglichen Position verbleibt und keinen mechanischen Beanspruchungen ausgesetzt ist. Des Weiteren ist das drahtförmige Messelement 98 gegen Umgebungseinflüsse, wie der hohen Temperatur der verbundenen Rohre, und Beschädigungen durch die aufsteckbaren Schaumstoffabdeckungen 102 geschützt und löst nur ein Signal aus, falls sich heiße Abluft durch Versagen der Dichtung unter dem Klemmring 16 sammelt und durch das Sensorgehäuse 96 und den Sensorhalter 100 am drahtförmigen Messelement 98, zum Beispiel ein wärmeempfindlicher Lichtleiter, vorbei nach außen entweicht. Die Montage des drahtförmigen Messelements 98 kann in vorteilhafter Weise ohne Werkzeuge nach dem Einbau aller Rohrverbindungen über diese hinweg erfolgen, in den Schaumstoffabdeckungen 102 und den elastischen Sensorhaltern 100, um die Dichtigkeit aller eingebundenen Rohrverbindungen gleichzeitig zu überwachen.

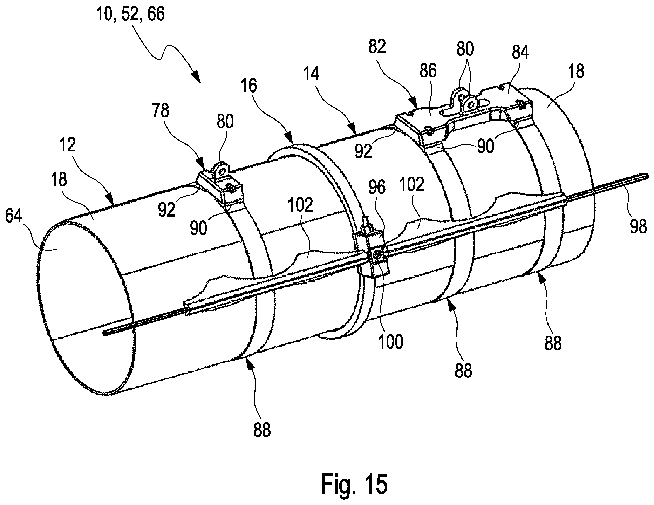

Figur 15 zeigt eine Zusammenstellungszeichnung der erfindungsgemäß vorgeschlagenen Rohrverbindung, sei es die erste Rohrverbindung 10, sei es die zweite Rohrverbindung 52 oder sei es die dritte Rohrverbindung 66.

Figur 15 zeigt, dass durch die Klemmeinrichtung 16 das erste Rohrteil 12 und das zweite Rohrteil 14 miteinander verbunden sind. An der Klemmeinrichtung 16 befindet sich das bereits vorstehend im Zusammenhang mit Figur 14 erläuterte Sensorgehäuse 96 eines Temperatursensors. Parallel zur Rohrachse des ersten Rohrteils 12 und des zweiten Rohrteils 14 erstreckt sich das bereits im Zusammenhang mit Figur 14 erwähnte drahtförmige Messelement 98 durch das Sensorgehäuse 96 des Temperatursensors. Beidseits des Sensorgehäuses 96 ist das drahtförmige Messelement 98 durch Schaumstoffabdeckungen 102, die sich auf der Außenwand 18 des ersten Rohrteils 12 beziehungsweise des zweiten Rohrteils 14 abstützen, gegen Umgebungseinflüsse geschützt.

Figur 15 zeigt darüber hinaus, dass um das Rohrteil 12 der Spannring 88 verläuft, dessen Enden 90, 92 durch die Klammer 78 verbunden werden. Analog dazu sind die beiden Spannringe 88, die die Außenwand 18 des zweiten Rohrteils 14 umschließen, durch die Brücke 82 miteinander verbunden. Diese umfasst den ersten Klammerkopf 84 und den zweiten Klammerkopf 86, wobei jeder der beiden Klammerköpfe 84, 86 einen der Spannringe 88 fixiert und spannt. Die beiden ösenförmigen Anbindungsstellen 80 ermöglichen eine Fixierung der in Figur 15 dargestellten ersten Rohrverbindung 10 oder zweiten Rohrverbindung 52 oder dritten Rohrverbindung 66 im jeweiligen Einbauraum, wobei in einer vereinfachten Bauweise die ösenförmigen Anbindungsstellen 80 auch in den Klemmring 16 integriert sein könnten, um die Funktionen, das Rohr zu halten und eine dichte Rohrverbindung herzustellen, in einem Bauteil zusammenzufassen und damit die Anzahl der benötigten Bauteile zu reduzieren.

Figur 14 zeigt eine Kombination aus Klemmeinrichtung 16 und einer Rohrverbindung 10, 52, 66 mit einer Zusatzfunktion und einer Dichtung, da auch bei radialem Kontakt zwischen Dichtung und Klemmeinrichtung 16 zwei die Rohrverbindung 10, 52, 66 umschließende Luftkanäle verbleiben, als komplett umschließenden Sammler eventuell austretende heiße Luft mit Sensorgehäuse als lokalem Heißluftaustritt, durch welchen das drahtförmige Messelement 98 hindurchgeführt ist. Die Figuren 11 bis 13 zeigen axial verschiebbare Halterungen der Rohrteile 12, 14, welche eine Abweichung vom geplanten Rohrverlauf durch Bauabweichungen der Rohrteile 12, 14 oder der umgebenden Strukturhalterungen, welche spannungsfrei montiert werden, mit winkelausgleichender Dichtungsvariante ohne Mehraufwand durch axiale Verschiebung von Spannringen 88 relativ zum Rohr während der Montage der Rohrteile 12, 14 an die umgebenden Strukturhalterungen ebenfalls spannungsfrei ausgleichen. Figur 15 zeigt sämtliche Montagemöglichkeiten der Varianten gemäß Figur 11 bis 14 in Zusammenschau. Ein Bezug zur Rohrverbindung 10, 52, 66 besteht darüber, die Vorteile der Rohrverbindungs-/Dichtungsvarianten auch für die Sensormontage beziehungsweise für eine Strukturverbindung im Flugzeug zu erweitern.

Die Rotationssicherung und Rotationspositionierung über Vorsprünge 54 und Ausnehmungen 56 ist so gestaltet, dass nur eine Variante der Rohrteile 12, 14, d. h. der Flansche, für eine Rohrverbindung 10, 52, 66 benötigt wird, da diese in sich selbst einrasten kann. Eine Verwendung von Male-/Female-Flanschen kann dadurch umgangen werden, sodass sich eine vereinfachte Flanschherstellung und Flanschmontage, d. h. eine Vereinfachung der Montage der Rohrteile 12, 14, ergibt.

Der Klemmring, d. h. die Klemmeinrichtung, erfährt eine weitere Nutzung als umlaufender Sammler unerwünschter Abluft bei Undichtigkeiten im Bereich der Rohrverbindung 10, 52, 66. Für den Fall, dass Abweichungen im Rohrverlauf oder Strukturabbindungen nicht ausgeglichen werden können, kann über axial verschiebbare Spannringe 88 eine spannungsfreie Montage ohne Mehraufwand erfolgen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

| | | | |
|---|---|---|---|
| 10 | Erste Rohrverbindung | 78 | Klammer |
| 12 | Erstes Rohrteil | 80 | Anbindungsstelle (Öse) |
| 14 | Zweites Rohrteil | 82 | Brücke |
| 16 | Klemmeinrichtung | 84 | Erster Klammerkopf |
| 18 | Außenwand | 86 | Zweiter Klammerkopf |
| 20 | Erste schräge Stirnfläche | 88 | Spannring |
| 22 | Zweite schräge Stirnfläche | 90 | Erstes Ende |
| 24 | Mehrteiliger Dichtring | 92 | Zweites Ende |
| 26 | Keilförmiger Querschnitt | 94 | Schraubenkopf-Gegenstück-Geometrie |
| 28 | Keilwinkel | 96 | Sensorgehäuse |
| 30 | Erste Dichtfläche | 98 | Drahtförmiges Messelement |
| 32 | Zweite Dichtfläche | 100 | Sensorhalter |
| 34 | Radialkraft | 102 | Schaumstoffabdeckung |
| 36 | Freiraum | 104 | Umschließendes geometrisches nicht rechteckiges Viereck |
| 38 | Erstes Dichtringhälftenende | 106 | Umschließendes geometrisches rechteckiges Viereck |
| 40 | Zweites Dichtringhälftenende | | |
| 42 | Auflagefläche | | |
| 44 | Erste Dichtringhälfte | | |
| 46 | Zweite Dichtringhälfte | | |
| 48 | Erste Lücke | | |
| 50 | Zweite Lücke | | |
| 52 | Zweite Rohrverbindung | | |
| 54 | Vorsprung | | |
| 56 | Ausnehmung | | |
| 58 | Komplementärgeometrie | | |
| 60 | 30°-Umfangsteil Vorsprung | | |
| 62 | 30°-Umfangsteil Ausnehmung | | |
| 64 | Innenwandung | | |
| 66 | Dritte Rohrverbindung | | |
| 68 | Einteiliger Dichtring | | |
| 70 | Rechteck-Querschnitt | | |
| 72 | Erste vertikale Stirnfläche | | |
| 74 | Zweite vertikale Stirnfläche | | |
| 76 | Stoßfuge | | |

## Patentansprüche

1. Rohrverbindung (10, 52, 66) mit einem ersten Rohrteil (12) und einem zweiten Rohrteil (14), mit mindestens einem mehrteiligen Dichtring (24; 44, 46) oder mindestens einem einteiligen Dichtring (68), der von einer Klemmeinrichtung (16) umgeben ist, wobei die Rohrteile (12, 14) jeweils eine erste schräg verlaufende Stirnfläche (20) oder vertikal verlaufende Stirnfläche (72), in Bezug auf die Rohrachse, und eine zweite schräg oder vertikal verlaufende Stirnfläche (22) oder eine zweite vertikal verlaufende Stirnfläche (74), in Bezug auf die Rohrachse, umfassen, die von der Klemmeinrichtung (16) übergriffen sind, die den mindestens einen einteiligen Dichtring (68) oder den mindestens einen mehrteiligen Dichtring (24; 44, 46) mit einer nach außen innen wirkenden Radialkraft (34) beaufschlagt, sodass der Dichtring (24; 44, 46; 68) in einem geometrischen Dreieck oder in einem geometrischen, nicht rechteckigen Viereck (104) gesichert ist, das durch die schräg verlaufende Stirnfläche (20, 22) des ersten Rohrteils (12) und des zweiten Rohrteils (14) definiert ist, oder dass der Dichtring (24; 44, 46; 68) in einem geometrischen rechteckigen Viereck (106) gesichert ist, das durch die vertikal verlaufende Stirnfläche (72, 74) des ersten Rohrteils (12) und des zweiten Rohrteils (14) definiert ist, **dadurch gekennzeichnet, dass** an einander zuweisenden Enden der Rohrteile (12, 14) in Umfangsrichtung eine Komplementärgeometrie (58) aus in alternierender Abfolge angeordneten Vorsprüngen (54) und Ausnehmungen (56) ausgeführt ist, so dass die Vorsprüngen (54) eine radial innere Kante des geometrischen Dreieck, des geometrischen nicht rechteckigen Viereck (104) oder des geometrischen rechteckigen Viereck (106) bilden.

2. Rohrverbindung (10, 52, 66) gemäß Anspruch 1, **dadurch gekennzeichnet, dass** der einteilige Dichtring (68) oder der mehrteilige Dichtring (24; 44, 46) einen keilförmigen Querschnitt (26), einen Rechteck-Querschnitt (70), einen Kreisquerschnitt oder einen ovalen Querschnitt aufweist.

3. Rohrverbindung (10, 52, 66) gemäß Anspruch 1, **dadurch gekennzeichnet, dass** der einteilige Dichtring (68) oder der mehrteilige Dichtring (24; 44, 46) aus PTFE, Kunststoffmaterial mit oder ohne Faserverstärkung, Gummi, Kunststoffmaterial mit Anteilen metallischem Materials, metallverstärkten Gummimischungen oder als reine metallische Abdichtung ausgeführt ist.

4. Rohrverbindung (10, 52, 66) gemäß Anspruch 1, **dadurch gekennzeichnet, dass** der einteilige Dichtring (68) oder der mehrteilige Dichtring (24; 44, 46) als Metallring mit keilförmigem Querschnitt (26) mit balligen Dichtflächen (30, 32) oder als Flachdichtring aus metallischem Material ausgeführt ist.

5. Rohrverbindung (10, 52, 66) gemäß Anspruch 2, **dadurch gekennzeichnet, dass** am keilförmigen Querschnitt (26) des einteiligen Dichtrings (68) oder des mehrteiligen Dichtrings (24; 44, 46) ein Keilwinkel (28) vorliegt und die erste Dichtfläche (30) und die zweite Dichtfläche (32) schräg verlaufen.

6. Rohrverbindung (10, 52, 66) gemäß Anspruch 3, **dadurch gekennzeichnet, dass** bei nicht parallelen Stirnflächen (20, 22) der Rohrteile (12,14) ein einteiliger Dichtring (68) mit keilförmigem Querschnitt (26) so verstärkt ausgeführt wird, dass dieser mit seinem Durchmesser eine radiale Verschiebung entgegen der Klemmeinrichtung (16) ermöglicht.

7. Rohrverbindung (10, 52, 66) gemäß Anspruch 5, **dadurch gekennzeichnet, dass** der Keilwinkel (28) zwischen 5° bis 30° liegt und bevorzugt 10° bis 15° beträgt.

8. Rohrverbindung (10, 52, 66) gemäß Anspruch 1, **dadurch gekennzeichnet, dass** der mehrteilige Dichtring (24) eine erste Dichtringhälfte (44) und eine zweite Dichtringhälfte (46) umfasst, die jeweils ein erstes Dichtringhälftenende (38) und ein zweites Dichtringhälftenende (40) aufweisen, die komplementär zueinander ausgebildet sind.

9. Rohrverbindung (10, 52, 66) gemäß Anspruch 8, **dadurch gekennzeichnet, dass** im montierten Zustand des mehrteiligen Dichtrings (24) vor Anzug der Klemmeinrichtung (16), die komplementär zueinander ausgebildeten ersten und zweiten Dichtringhälftenenden (38, 40) eine erste Lücke (48) beziehungsweise eine zweite Lücke (50) bilden und im auf eine Außenwand (18) aufgelegten Zustand eine Anlagefläche (42) bilden.

10. Rohrverbindung (10, 52, 66) gemäß Anspruch 1, **dadurch gekennzeichnet, dass** an den Enden der Rohrteile (12, 14) jeweils in Umfangsrichtung der Außenwand (18) der Rohrteile (12, 14) die Vorsprünge (54) und die Ausnehmungen (56) in gleichmäßiger oder in ungleichmäßiger Verteilung angeordnet sind.

11. Rohrverbindung (10, 52, 66) gemäß Anspruch 1, **dadurch gekennzeichnet, dass** diese bei begrenzter axialer Kompression einen einteiligen Dichtring (68) umfasst, der einen Rechteck-Querschnitt (70) aufweist und zwischen einer ersten vertikalen Stirnfläche (72) sowie einer zweiten vertikalen Stirnfläche (74) komprimiert wird, derart, dass die Komplementärgeometrie (56) aus Vorsprüngen (54) und Ausnehmungen (56) aneinander anliegt und den einteiligen Dichtring (68) radial in dessen Dichtposition sichert.

12. Rohrverbindung (10, 52, 66) gemäß Anspruch 1, **dadurch gekennzeichnet, dass** an einer Außenwand (18) der Rohrteile (12, 14) jeweils mindestens eine Klammer (78) und mindestens eine Brücke (82) mit einem ersten Klammerkopf (84) und einem zweiten Klammerkopf (86) vorgesehen sind, welche Spannringe (88) am Umfang der Rohrverbindung (10, 52, 66) fixieren.

13. Rohrverbindung (10, 52, 66) gemäß Anspruch 1, **dadurch gekennzeichnet, dass** Klemmeinrichtung (16) mit mindestens einer Anbindungsstelle (80) ausgeführt werden und beide Rohrenden über die Rohrverbindung (10, 52, 66) in ihrer Position halten.

14. Rohrverbindung (10, 52, 66) gemäß Anspruch 12, **dadurch gekennzeichnet, dass** die Spannringe (88) ein erstes Ende (90) und ein zweites Ende (92) aufweisen, die jeweils verdickt ausgeführt sind und jeweils eine Schraubenkopf-Gegenstück-Geometrie (94) und eine Klemmschräge aufweisen.

15. Rohrverbindung (10, 52, 66) gemäß Anspruch 13, **dadurch gekennzeichnet, dass** entlang der Außenwand (18) des ersten Rohrteils (12) und des zweiten Rohrteils (14) ein drahtförmiges Messelement (98) verläuft.

16. Rohrverbindung (10, 52, 66) gemäß Anspruch 15, **dadurch gekennzeichnet, dass** das drahtförmige Messelement (98) durch ein oder mehrere aufklebbare, montierbare, eine Schlitzung in Längsrichtung aufweisende Schaumstoffabdeckungen (102) gehalten, geführt und geschützt ist.

17. Verwendung der Rohrverbindung (10, 52, 66) gemäß einem der vorstehenden Ansprüche in einem Luftfahrzeug.

## Claims

1. Pipe connection (10, 52, 66) with a first pipe part (12) and a second pipe part (14), with at least one multi-part sealing ring (24; 44, 46) or at least one single-part sealing ring (68), which is surrounded by a clamping device (16), wherein the pipe parts (12, 14) each comprise a first obliquely end face (20) or a first vertically extending end face (72), with respect to the pipe axis, and a second obliquely or vertically extending end face (22) or a second vertically extending end face (74), with respect to the pipe axis, these end faces being overlapped by the clamping device (16), which applies an outwardly acting radial force (34) to the at least one single-part sealing ring (68) or the at least one multi-part sealing ring (24; 44, 46), so that the sealing ring (24; 44; 46; 68) is secured in an enclosing geometric triangle or in an enclosing geometric non-rectangular quadrilateral (104) which is defined by the obliquely extending end face (20, 22) of the first pipe part (12) and of the second pipe part (14), or so that the sealing ring (24; 44, 46, 68) is secured in an enclosing geometric rectangular quadrilateral (106) which is defined by the vertically extending end face (72, 74) of the first pipe part (12) and of the second pipe part (14), **characterised in that** a complementary geometry (58) of projections (54) and recesses (56) arranged in alternating sequence is designed at mutually facing ends of the pipe parts (12, 14) in the circumferential direction, so that the projections (54) form an inner radial edge of the geometric triangle, the geometric non rectangular quadrilateral (104) or the geometric rectangular quadrilateral (106).

2. Pipe connection (10, 52, 66) according to Claim 1, **characterised in that** the single-part sealing ring (68) or the multi-part sealing ring (24; 44, 46) has a wedge-shaped cross-section (26), a rectangular cross-section (70), a circular cross-section or an oval cross-section.

3. Pipe connection (10, 52, 66) according to Claim 1, **characterised in that** the single-part sealing ring (68) or the multi-part sealing ring (24; 44, 46) is designed of PTFE, plastic material with or without fibre reinforcement, rubber, plastic material with portions of metallic materials, metal-reinforced rubber mixtures or as a purely metallic seal.

4. Pipe connection (10, 52, 66) according to Claim 1, **characterised in that** the single-part sealing ring (68) or the multi-part sealing ring (24; 44, 46) is designed as a metal ring with a wedge-shaped cross-section (26) with crowned sealing surfaces (30, 32) or as a flat sealing ring made of metallic material.

5. Pipe connection (10, 52, 66) according to Claim 2, **characterised in that** there is a wedge angle (28) at the wedge-shaped cross-section (26) of the single-part sealing ring (68) or the multi-part sealing ring (24; 44, 46) and the first sealing surface (30) and the second sealing surface (32) extend obliquely.

6. Pipe connection (10, 52, 66) according to Claim 3, **characterised in that** in the case of non-parallel end faces (20, 22) of the pipe parts (12, 14) a single-part sealing ring (68) with a wedge-shaped cross-section (26) is designed reinforced in such a way that it allows a radial displacement against the clamping device (16) by means of its diameter.

7. Pipe connection (10, 52, 66) according to Claim 5, **characterised in that** the wedge angle (28) is between 5° to 30° and is preferably 10° to 15°.

8. Pipe connection (10, 52, 66) according to Claim 1, **characterised in that** the multi-part sealing ring (24) comprises a first sealing ring half (44) and a second sealing ring half (46), each of which has a first sealing ring half end (38) and a second sealing ring half end (40) which are formed complementary to each other.

9. Pipe connection (10, 52, 66) according to Claim 8, **characterised in that**, in the assembled state of the multi-part sealing ring (24) before the clamping device (16) is tightened, the first and second sealing ring half ends (38, 40), which are formed complementary to each other, form a first gap (48) and a second gap (50), respectively, and, in the state in which they are placed on the exterior wall (48), form a bearing surface (42).

10. Pipe connection (10, 52, 66) according to Claim 1, **characterised in that** the projections (54) and the recesses (56) are arranged in uniform or in non-uniform distribution at the ends of each of the pipe parts (12, 14) in the circumferential direction of the exterior wall (18) of the pipe parts (12, 14).

11. Pipe connection (10, 52, 66) according to Claim 1, **characterised in that** it comprises, under limited axial compression, a single-part sealing ring (68), which has a rectangular cross-section (70) and is compressed between a first vertical end face (72) as well as a second vertical end face (74) in such a way that the complementary geometry (56) of projections (54) and recesses (56) abuts against each other and radially secures the single-part sealing ring (68) in its sealing position.

12. Pipe connection (10, 52, 66) according to Claim 1, **characterised in that** at least one clamp (78) and at least one bridge (82) with a first clamp head (84) and a second clamp head (86) are provided at the exterior wall (18) of each of the pipe parts (12, 14), which fix tension rings (88) at the circumference of the pipe connection (10, 52, 66).

13. Pipe connection (10, 52, 66) according to Claim 1, **characterised in that** clamping devices (16) are designed with at least one connection point (80) and hold both pipe ends in their position by means of the pipe connection (10, 52, 66).

14. Pipe connection (10, 52, 66) according to Claim 12, **characterised in that** the tension rings (88) have a first end (90) and a second end (92), which are each designed thickened and have each a screw head counterpart geometry (94) and a clamping bevel.

15. Pipe connection (10, 52, 66) according to Claim 13, **characterised in that** a wire-shaped measuring element (98) extends along the exterior wall (18) of the first pipe part (12) and of the second pipe part (14).

16. Pipe connection (10, 52, 66) according to Claim 15, **characterised in that** the wire-shaped measuring element (98) is held, guided, and protected by one or more adhesively bondable, mountable foam covers (102) having a slotting in the longitudinal direction.

17. Use of the pipe connection (10, 52, 66) according to any one of the preceding claims in an aircraft.

## Revendications

1. Raccord de tuyauterie (10, 52, 66) avec une première partie de tuyau (12) et une seconde partie de tuyau (14), avec au moins une bague d'étanchéité (24 ; 44, 46) en plusieurs parties ou au moins une bague d'étanchéité (68) en une partie qui est entourée par un dispositif de serrage (16), dans lequel les parties de tuyau (12, 14) comprennent respectivement une première surface avant (20) s'étendant en biais ou une surface avant (72) s'étendant verticalement par rapport à l'axe de tuyau, et une seconde surface avant (22) s'étendant en biais ou verticalement ou une seconde surface avant (74) s'étendant verticalement par rapport à l'axe de tuyau, surfaces qui sont chevauchées par le dispositif de serrage (16) qui exerce une force radiale (34) agissant vers l'extérieur sur la au moins une bague d'étanchéité (68) en une partie ou sur la au moins une bague d'étanchéité (24 ; 44, 46) en plusieurs parties, de sorte que la bague d'étanchéité (24 ; 44, 46 ; 68) soit fixée dans un triangle géométrique ou dans un quadrilatère (104) géométrique non rectangulaire qui est défini par la surface avant (20, 22) de la première partie de tuyau (12) et de la seconde partie de tuyau (14) s'étendant en biais, ou en ce que la bague d'étanchéité (24 ; 44, 46 ; 68) soit fixée dans un quadrilatère (106) géométrique rectangulaire qui est défini par la surface avant (72, 74) de la première partie de tuyau (12) et de la seconde partie de tuyau (14) s'étendant verticalement, **caractérisé en ce qu'**une géométrie complémentaire (58) composée de saillies (54) et d'évidements (56) agencés dans un ordre alternatif est exécutée au niveau des extrémités tournées l'une vers l'autre des parties de tuyau (12, 14) dans le sens périphérique, de sorte que les saillies (54) forment une arête radialement intérieure du triangle géométrique, du quadrilatère (104) géométrique non rectangulaire ou du quadrilatère (106) géométrique rectangulaire.

2. Raccord de tuyauterie (10, 52, 66) selon la revendication 1, **caractérisé en ce que** la bague d'étanchéité (68) en une partie ou la bague d'étanchéité (24 ; 44, 46) en plusieurs parties présente une section transversale (26) cunéiforme, une section transversale rectangulaire (70), une section transversale circulaire ou une section transversale ovale.

3. Raccord de tuyauterie (10, 52, 66) selon la revendication 1, **caractérisé en ce que** la bague d'étanchéité (68) en une partie ou la bague d'étanchéité (24 ; 44, 46) en plusieurs parties est fabriquée en PTFE, matière plastique renforcée ou non par des fibres, caoutchouc, matière plastique avec des parts de matière métallique, mélanges de caoutchouc renforcés de métal ou comme un joint métallique pur.

4. Raccord de tuyauterie (10, 52, 66) selon la revendication 1, **caractérisé en ce que** la bague d'étanchéité (68) en une partie ou la bague d'étanchéité (24 ; 44, 46) en plusieurs parties est formée comme bague métallique avec une section transversale (26) cunéiforme avec des surfaces étanches (30, 32) bombées ou comme bague d'étanchéité plate en matière métallique.

5. Raccord de tuyauterie (10, 52, 66) selon la revendication 2, **caractérisé en ce qu'**un angle d'attaque (28) est présent au niveau de la section transversale (26) cunéiforme de la bague d'étanchéité (68) en une partie ou de la bague d'étanchéité (24 ; 44, 46) en plusieurs parties, et la première surface étanche (30) et la seconde surface étanche (32) s'étendent en biais.

6. Raccord de tuyauterie (10, 52, 66) selon la revendication 3, **caractérisé en ce que**, si des surfaces avant (20, 22) des parties de tuyau (12, 14) ne sont pas parallèles, une bague d'étanchéité (68) en une partie avec une section transversale (26) cunéiforme est renforcée de telle manière que celle-ci permette avec son diamètre un déplacement radial à l'encontre du dispositif de serrage (16).

7. Raccord de tuyauterie (10, 52, 66) selon la revendication 5, **caractérisé en ce que** l'angle d'attaque (28) est compris entre 5° et 30° et se situe de préférence entre 10° et 15°.

8. Raccord de tuyauterie (10, 52, 66) selon la revendication 1, **caractérisé en ce que** la bague d'étanchéité (24) en plusieurs parties comprend une première moitié de bague d'étanchéité (44) et une seconde moitié de bague d'étanchéité (46) qui présentent respectivement une première extrémité de moitié de bague d'étanchéité (38) et une seconde extrémité de moitié de bague d'étanchéité (40) qui sont formées de manière complémentaire l'une à l'autre.

9. Raccord de tuyauterie (10, 52, 66) selon la revendication 8, **caractérisé en ce que** dans l'état monté de la bague d'étanchéité (24) en plusieurs parties avant le serrage du dispositif de serrage (16), les premières et secondes extrémités de moitié de bague d'étanchéité (38, 40) formées de manière complémentaire l'une à l'autre forment un premier vide (48) ou un second vide (50) et forment une surface d'appui (42) dans l'état placé sur une paroi extérieure (18).

10. Raccord de tuyauterie (10, 52, 66) selon la revendication 1, **caractérisé en ce que** les saillies (54) et les évidements (56) sont répartis de manière régulière ou irrégulière au niveau des extrémités des parties de tuyau (12, 14) respectivement dans le sens circonférentiel de la paroi extérieure (18) des parties de tuyau (12, 14).

11. Raccord de tuyauterie (10, 52, 66) selon la revendication 1, **caractérisé en ce que** celui-ci comprend, lors d'une compression axiale limitée, une bague d'étanchéité (68) en une partie qui présente une section transversale rectangulaire (70) et est comprimée entre une première surface avant (72) verticale et une seconde surface avant (74) verticale de sorte que la géométrie complémentaire (56) est composée de saillies (54) et d'évidements (56) qui reposent l'une contre l'autre et fixe la bague d'étanchéité (68) en une partie radialement dans sa position d'étanchéité.

12. Raccord de tuyauterie (10, 52, 66) selon la revendication 1, **caractérisé en ce que** respectivement au moins une pince (78) et au moins un pont (82) avec une première tête de pince (84) et une seconde tête de pince (86) sont prévus au niveau d'une paroi extérieure (18) des parties de tuyau (12, 14), lesquels pince et pont fixent des bagues de serrage (88) au niveau de la circonférence du raccord de tuyauterie (10, 52, 66).

13. Raccord de tuyauterie (10, 52, 66) selon la revendication 1, **caractérisé en ce que** des dispositif de serrage (16) sont conçus avec au moins un point de liaison (80) et maintiennent les deux extrémités de tuyau dans leur position par le biais du raccord de tuyauterie (10, 52, 66).

14. Raccord de tuyauterie (10, 52, 66) selon la revendication 12, **caractérisé en ce que** les bagues de serrage (88) présentent une première extrémité (90) et une seconde extrémité (92) qui sont formées respectivement de manière épaissie et présentent respectivement une géométrie de pièce antagoniste de tête de vis (94) et un biais de serrage.

15. Raccord de tuyauterie (10, 52, 66) selon la revendication 13, **caractérisé en ce qu'**un élément de mesure (98) filiforme s'étend le long de la paroi extérieure (18) de la première partie de tuyau (12) et de la seconde partie de tuyau (14).

16. Raccord de tuyauterie (10, 52, 66) selon la revendication 15, **caractérisé en ce que** l'élément de mesure (98) filiforme est maintenu, guidé et protégé par un ou plusieurs recouvrements en mousse (102) collables, montables et présentant une fente dans le sens longitudinal.

17. Utilisation du raccord de tuyauterie (10, 52, 66) selon l'une quelconque des revendications précédentes dans un aéronef.
